# EUROPEAN PATENT APPLICATION

(11) **EP 4 806 732 A1**
(43) Date of publication of application: **16.09.2026**
(21) Application number: 25210663.8
(22) Date of filing: 23.10.2025
(51) Int. Cl.: B60R 21/231, B60R 21/2338

(54) **AIRBAG DEVICE FOR VEHICLE**

(30) Priority: 11.03.2025 KR 20250031461
(71) Applicant: Hyundai Mobis Co., Ltd., Gangnam-gu Seoul 06141 (KR)
(72) Inventor: LEE, Dong Gil, Gyeonggi-do (KR); HARM, Jae Jun, Gyeonggi-do (KR)
(74) Representative: Vossius & Partner Patentanwälte Rechtsanwälte mbB

(57) **Abstract**

An airbag device for a vehicle including: a seat mounted to a vehicle body to allow an occupant to sit thereon; a headrest mounted to the seat and configured to support the occupant's head; a housing disposed at a rear of the seat; and an airbag mounted to the housing to be deployed to protect the occupant's head or neck in the event of a collision of the vehicle body. The airbag includes: a first chamber to be inflated by fluid supplied from an inflator; a pair of second chambers in communication with the first chamber and disposed on opposing sides of occupant's head; and an aligning tether to connect the pair of second chambers and restrict spacing between the pair of second chambers.

## Description

### BACKGROUND

### FIELD

Exemplary embodiments of the present disclosure relate to an airbag device for a vehicle, and more particularly, to an airbag device for a vehicle, which may protect an occupant when a collision occurs from the rear of the occupant.

### DESCRIPTION OF THE RELATED ART

In general, an airbag of a vehicle is installed to protect an occupant in the event of a frontal collision. A collision detection sensor mounted on a front bumper of the vehicle detects a collision, and based on a detection signal, an electronic control unit (ECU) activates an inflator installed in a steering wheel, such that the vehicle airbag is deployed.

However, in the event of a rear collision, the occupant's occiput is not properly protected, which may lead to a significant loss of life.

In particular, an autonomous vehicle allows an occupant to freely change a front-facing direction of a seat, and thus the frequency of rear collisions may increase in addition to frontal collisions. In the event of a rear collision, the occupant may collide with a headrest due to inertia, and if the headrest is damaged by the impact, the occupant's neck may be injured. Accordingly, there is a need to resolve this issue.

The related art of the present disclosure is disclosed in Korean Patent Application Publication No. 1998-0059459 (published on October 7, 1998 and entitled "AIRBAG FOR PROTECTION AGAINST

### REAR COLLISION OF VEHICLE").

### SUMMARY

Various aspects of the present disclosure provide an airbag device for a vehicle, which may protect an occupant's head and neck when a collision occurs from the rear of the occupant.

Various aspects of the present disclosure also provide an airbag device for a vehicle, which may prevent or mitigate injury to an occupant by restraining the spreading or twisting between second chambers, which are deployed on both sides of the occupant's head.

An airbag device for a vehicle according to an aspect of the present disclosure includes: a seat mounted to a vehicle body and configured to allow an occupant to sit thereon; a headrest mounted to the seat and configured to support the occupant's head; a housing disposed at a rear of the seat; and an airbag mounted to the housing and configured to be deployed to protect the occupant's head or neck in the event of a collision of the vehicle body, wherein the airbag includes: a first chamber configured to be inflated by fluid supplied from an inflator; a pair of second chambers configured to be in communication with the first chamber and disposed on opposite sides of occupant's head; and an aligning tether configured to connect the pair of second chambers and to restrict spacing between the pair of second chambers.

The aligning tether may be coupled to a front end portion of each of the pair of second chambers.

The aligning tether may be sewn and coupled to the front end portion of each of the pair of second chambers, and a vertical length of a sewing portion may be greater than or equal to half of a vertical length of the front end portion of each of the second chambers.

The aligning tether may be coupled to the front end portion of each of outer panels of the pair of second chambers.

The aligning tether may include a plurality of openings to secure the occupant's field of view.

The plurality of openings may be spaced apart from a centerline of the aligning tether.

The first chamber may be configured to be deployed from the rear of the headrest and inflated, and the second chamber may be configured to be deployed from the front of the first chamber and inflated.

The first chamber may be configured to come into contact with a rear surface of the headrest to support the headrest.

The first chamber and the pair of second chambers, may have an U-shape or a Korean letter ' 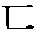 '-shape when fully inflated and viewed from above.

Lower end portions of the pair of second chambers may be positioned above the occupant's shoulders, respectively.

The airbag device for a vehicle according to the present disclosure may protect an occupant's head and neck when a collision occurs from the rear of the occupant.

According to the present disclosure, injury to the occupant may be prevented or mitigated by restraining the spreading or twisting between second chambers, which are deployed on both sides of the occupant's head.

According to the present disclosure, aligning of a pair of the second chambers may be controlled, and the occupant's field of view may be secured to enable the occupant to respond safely and quickly after a collision occurs.

### BRIEF DESCRIPTION OF THE DRAWINGS

FIG. 1 is a view schematically showing an airbag device for a vehicle according to an embodiment of the present disclosure.
FIG. 2 is a view schematically showing a seat according to an embodiment of the present disclosure.
FIG. 3 is a view schematically showing a housing according to an embodiment of the present disclosure.
FIG. 4 is a view showing a state in which an airbag according to an embodiment of the present disclosure is fully inflated.
FIG. 5 is a block diagram showing the airbag device for a vehicle according to an embodiment of the present disclosure.
FIG. 6 is a perspective view showing the airbag according to an embodiment of the present disclosure.
FIG. 7 is a cross-sectional view taken along line A-A in FIG. 6.
FIG. 8 is an exploded view showing an outer panel of a second chamber and an aligning tether according to an embodiment of the present disclosure.
FIG. 9 is an exploded view showing a modification of the outer panel of the second chamber and the aligning tether according to an embodiment of the present disclosure.

### DETAILED DESCRIPTION

Hereinafter, an airbag device for a vehicle will be described with reference to the accompanying drawings through various embodiments. In this process, the thickness of lines or the size of components shown in the drawings may be exaggerated for clarity and convenience of explanation. In addition, the terms as used herein are defined in consideration of functions thereof in the present disclosure, and this may change depending on a user or operator's intention or practice. Therefore, these terms should be defined based on the entirety of the disclosure set forth herein.

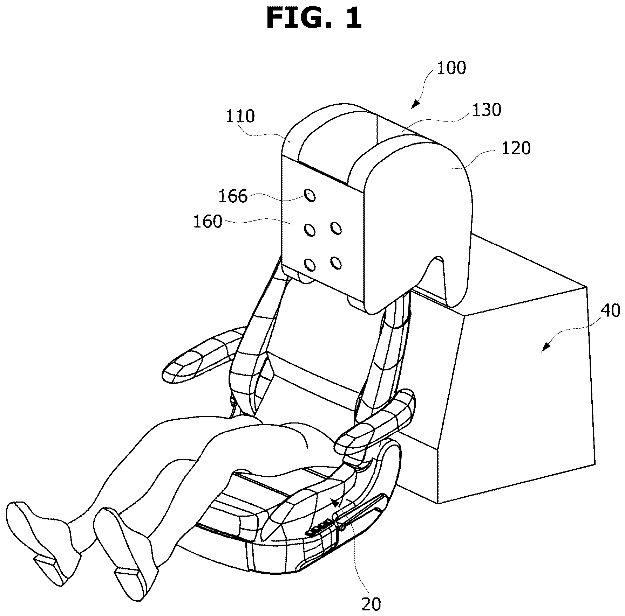

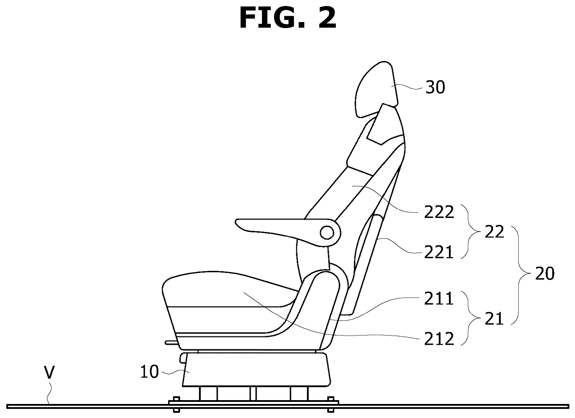

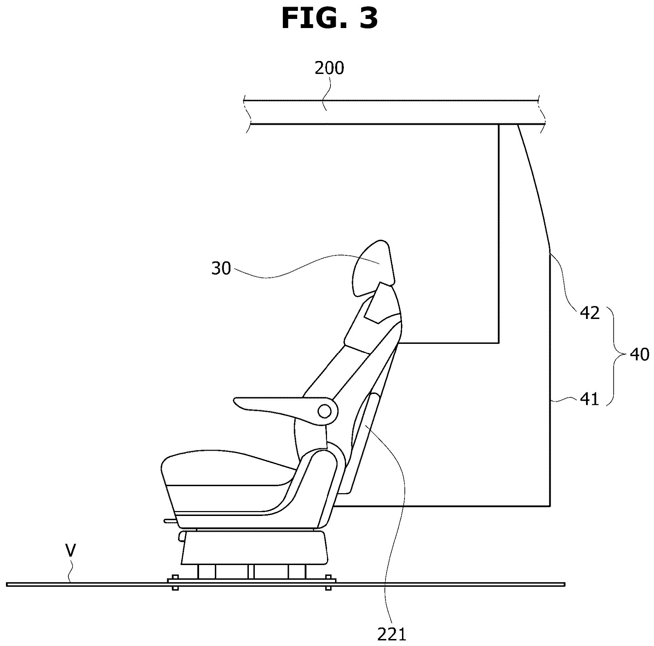

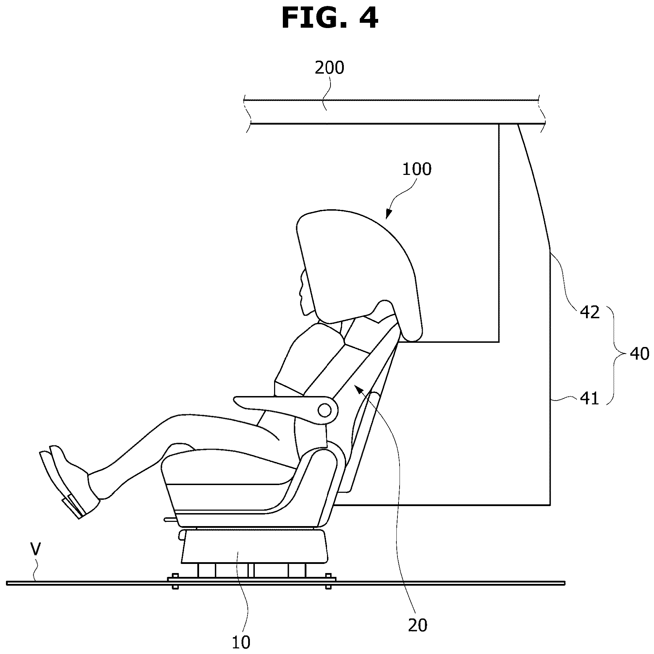

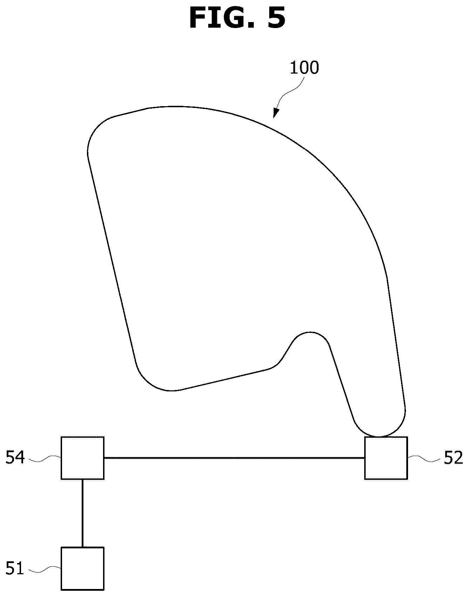

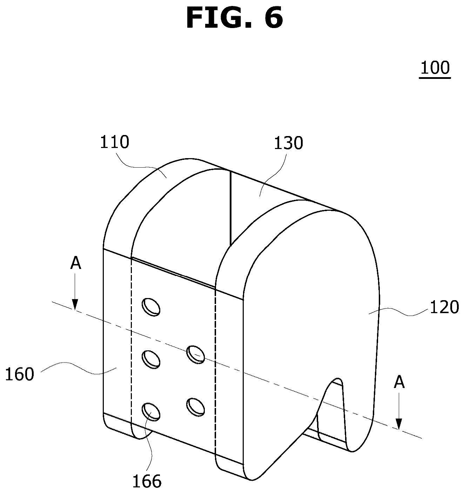

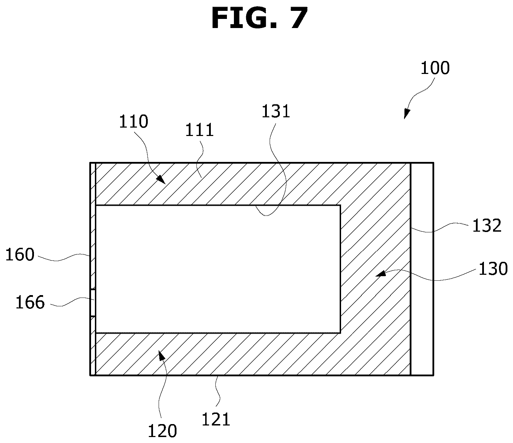

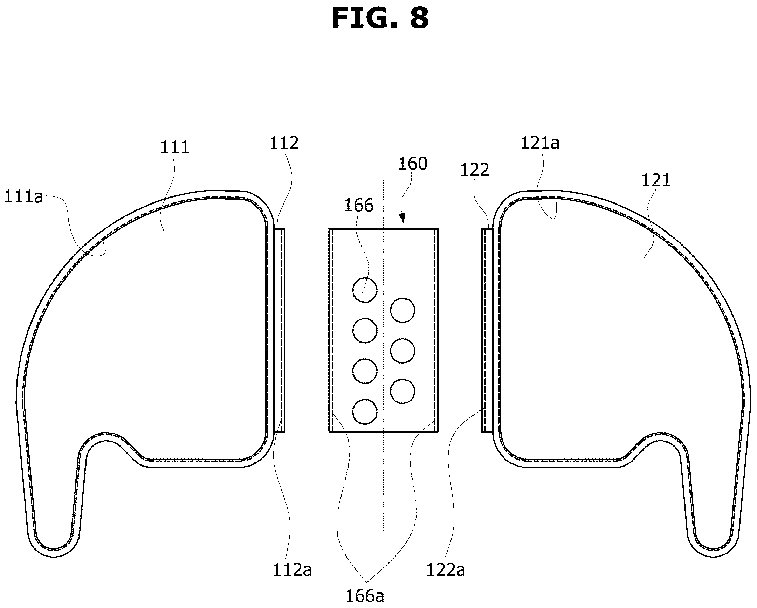

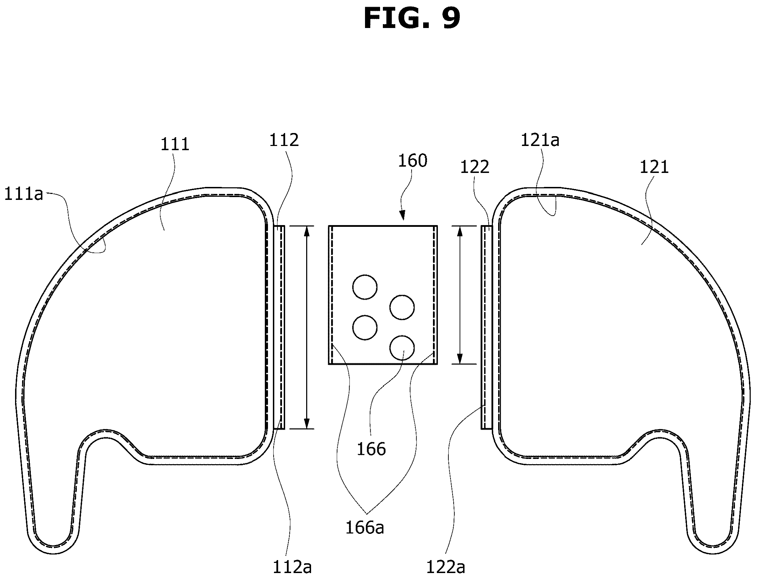

FIG. 1 is a view schematically showing an airbag device for a vehicle according to an embodiment of the present disclosure. FIG. 2 is a view schematically showing a seat according to an embodiment of the present disclosure. FIG. 3 is a view schematically showing a housing according to an embodiment of the present disclosure. FIG. 4 is a view showing a state in which an airbag according to an embodiment of the present disclosure is fully inflated. FIG. 5 is a block diagram showing the airbag device for a vehicle according to an embodiment of the present disclosure. FIG. 6 is a perspective view showing the airbag according to an embodiment of the present disclosure. FIG. 7 is a cross-sectional view taken along line A-A in FIG. 6. FIG. 8 is an exploded view showing an outer panel of a second chamber and an aligning tether according to an embodiment of the present disclosure. FIG. 9 is an exploded view showing a modification of the outer panel of the second chamber and the aligning tether according to an embodiment of the present disclosure.

Referring to FIGS. 1 to 9, an airbag device for a vehicle according to an embodiment of the present disclosure includes a seat 20, a headrest 30, a housing 40, and an airbag 100. The airbag device for a vehicle according to an embodiment of the present disclosure may further include a position changing part 10.

The position changing part 10 is mounted to a vehicle body V and is capable of changing position within the vehicle body V. The position changing part 10 may be moved along a rail provided in the vehicle body V. The position changing part 10 may be rotated about a rotation axis. The seat 20, on which an occupant sits, may be moved forward and backward by the position changing part 10, and, if necessary, may be rotated to face another occupant.

The seat 20 may be directly mounted to the vehicle body V or mounted to the vehicle body V through the position changing part 10. An occupant may sit on the seat 20.

The headrest 30 may be mounted to the seat 20 and support the occupant's head. The headrest 30 may be adjustable in height to correspond to a height of the occupant's head. The headrest 30 may include a cushioning material.

The housing 40 may be mounted to the vehicle body V and disposed at the rear of the seat 20. The housing 40 being disposed at the rear of the seat 20 means that the housing 40 is disposed at the rear of the seat 20 regardless of whether the seat 20 is in a forward-facing or rear-facing state. Accordingly, when the seat 20 is in a forward-facing state, the housing 40 may be disposed behind the seat 20 relative to the vehicle body V and located at a rear side of the seat 20. When the seat 20 is in a rear-facing state, the housing 40 may be disposed in front of the seat 20 relative to the vehicle body V and located at a rear side of the seat 20.

A collision of the vehicle body V may be a rear collision or oblique rear collision of a vehicle when the seat 20 is in a forward-facing state, and may be a frontal collision or oblique frontal collision of the vehicle when the seat 20 is in a rear-facing state. A collision of the vehicle body V may be a collision that occurs from the rear of the occupant's head.

In a non-deployed state, the airbag 100 may be mounted to the housing 40; and in the event of a collision of the vehicle body V, the airbag 100 may be deployed from the housing 40 and inflated outside the housing 40 so as to protect the occupant's head or neck. The collision of the vehicle body V includes all collisions in which an impact of a set magnitude or greater is applied to a vehicle occupied by an occupant, such as a collision between vehicles and a collision between a vehicle and another object.

The airbag 100 may support the headrest 30 from the rear to prevent the headrest 30 from bending backward. Accordingly, the airbag 100 may prevent damage to the headrest 30, thereby preventing or mitigating injury to the occupant caused by bending of the neck.

In the event of a collision of the vehicle body V, the occupant may be thrown upward due to a ramping-up behavior. In this case, the airbag 100 may directly support the occupant's head or neck to prevent or mitigate injury to the occupant.

Referring to FIGS. 2 and 3, the seat 20 may include a seat cushion 21 and a seatback 22.

The seat cushion 21 may support the occupant's buttocks. The seat cushion 21 may be mounted to the position changing part 10. Movement or rotation of the position changing part 10 may change a position of the seat cushion 21 or rotate the seat cushion 21.

The seat cushion 21 may include a first seat securing portion 211, which is coupled to the position changing part 10, and a first seat cushioning portion 212, which is coupled to the first seat securing portion 211. The first seat securing portion 211 may include a metal material, and the first seat cushioning portion 212 may include a material capable of absorbing impact.

The seatback 22 may be connected to the seat cushion 21 and support the occupant's back. The seatback 22 may include a second seat securing portion 221, which is coupled to the first seat securing portion 211, and a second seat cushioning portion 222, which is coupled to the second seat securing portion 221. The second seat securing portion 221 may include a metal material, and the second seat cushioning portion 222 may include a material capable of absorbing impact.

The headrest 30 may be mounted on an upper portion of the seatback 22. The headrest 30 may be inserted into a groove formed in the second seat securing portion 221, and may be adjustable in height. The headrest 30 may support the occupant's neck or back of the head.

The housing 40 may include a first housing portion 41 and a second housing portion 42. The housing 40 may include a fixture installed in the vehicle.

The first housing portion 41 may be disposed at the rear of the seat 20, and may be fixedly installed to the vehicle body V. A highest point of the first housing portion 41 may be disposed lower than a lowest point of the headrest 30.

The second housing portion 42 may extend upward from the first housing portion 41. The second housing portion 42 may be adjacent to or in close contact with a roof 200. The second housing portion 42 may be disposed to be spaced apart from the headrest 30.

The second housing portion 42 may be adjustable in length. A length of the second housing portion 42 may be increased or decreased in a vertical direction. The second housing portion 42 may be movable in a horizontal direction along a rail formed in the first housing portion 41.

Referring to FIG. 5, the airbag device for a vehicle according to an embodiment of the present disclosure may include a sensor 51, an inflator 52, and a control unit 54.

The sensor 51 may detect an occurrence of a collision of the vehicle body V. The sensor 51 may be disposed at various points, such as a front surface, a side surface, and a rear surface of the vehicle body V, to detect in real time whether a collision of the vehicle body V has occurred. The sensor 51 may include a function of predicting an occurrence of a collision of the vehicle body V.

The inflator 52 may be mounted to the housing 40. The inflator 52 may be built into the first housing portion 41. The inflator 52 may be ignited by an ignition signal from the control unit 54 to discharge fluid, for example, gas, into the airbag 100.

The airbag 100 may be deployed by gas supplied from the inflator 52. The airbag 100 may pierce through a surface of the first housing portion 41 and be inflated at an initial stage of deployment.

The control unit 54 may receive a detection signal from the sensor 51 and control the inflator 52. In response to the sensor 51 detecting a collision of the vehicle body V and transmitting a detection signal to the control unit 54, the control unit 54, which has received the detection signal, may ignite the inflator 52. Accordingly, the inflator 52 may discharge gas.

The inflator 52 and the airbag 100 may be built into an airbag case (not illustrated) provided in the first housing portion 41. An upper portion of the airbag case may be open, and the open upper portion of the airbag case may be covered by a surface of the first housing portion 41. During deployment of the airbag 100, the surface of the first housing portion 41 covering the open upper portion of the airbag case may be cut or ruptured, and the airbag 100 may be inflated upward.

Referring to FIGS. 4 to 9, the airbag 100 may include a first chamber 130, second chambers 110 and 120, and an aligning tether 160.

The first chamber 130 may be inflated by gas supplied from the inflator 52, and the second chambers 110 and 120 may be inflated by gas supplied from the first chamber 130. The first chamber 130 and the second chambers 110 and 120 are formed to be in communication with each other.

The inflator 52 may be directly connected to the first chamber 130 or connected through a connecting member such as a hose. Accordingly, the gas supplied from the inflator 52 may be directly supplied to the first chamber 130, and may be supplied to the second chambers 110 and 120 while the first chamber 130 is inflated. Accordingly, in the airbag 100, the first chamber 130 may be first inflated, and then the second chambers 110 and 120 may be inflated.

The first chamber 130 may be deployed from the rear of the headrest 30 and inflated. A front surface of the first chamber 130 may come into direct contact with a rear surface of the headrest 30. Accordingly, the headrest 30 is supported on the first chamber 130, such that the headrest 30 may be prevented from bending in the event of a collision of the vehicle body V.

In the event of a collision of the vehicle body V, the occupant may be thrown upward due to a ramping-up behavior. In this case, the front surface of the first chamber 130 may directly support the occupant's head or neck to prevent or mitigate injury to the occupant.

Accordingly, the first chamber 130 may stably support the second chambers 110 and 120, the headrest 30, and the occupant's head or neck.

The second chambers 110 and 120, which are fully inflated, may be disposed on both sides of occupant's head, respectively. The second chambers 110 and 120 may be deployed from the front of the first chamber 130 and inflated.

A pair of the second chambers 110 and 120 are connected to the front surface of the first chamber 130. The second chamber 110 on a first side (the left side in FIG. 6) is connected to a first side of the front surface of the first chamber 130, and the second chamber 120 on a second side (the right side in FIG. 6) is connected to a second side of the front surface of the first chamber 130.

The pair of the second chambers 110 and 120 may be disposed to be spaced apart from each other.

A distance between the second chamber 110 on the first side and the second chamber 120 on the second side is designed to be greater than a lateral width of the headrest 30, such that a front end portion of the second chamber 110 on the first side and a front end portion of the second chamber 120 on the second side may be deployed forward without interfering with the headrest 30.

The first chamber 130 and the pair of the second chambers 110 and 120, which are fully inflated, may have an U-shape or a Korean letter ' 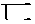 '-shape as a whole when viewed from above. Accordingly, the pair of the second chambers 110 and 120 may support both sides of the occupant's head, and the first chamber 130 may support the occupant's back of the head, thereby preventing or mitigating injury to the occupant not only in a rear collision but also in an oblique rear collision. The pair of the second chambers 110 and 120 may prevent lateral shaking of the occupant's head, and the first chamber 130 may prevent the occupant's neck from bending backward.

A lower end portion of the second chamber 110 on the first side and a lower end portion of the second chamber 120 on the second side may be positioned above the occupant's shoulders, respectively. Accordingly, the pair of the second chambers 110 and 120, which have been deployed, directly restrain the occupant's shoulders in the event of a collision of the vehicle body V, thereby preventing or reducing the occupant's ramping-up behavior in which the occupant is thrown upward.

A lowest end of the first chamber 130 may be disposed lower than lowest ends of the pair of the second chambers 110 and 120. Accordingly, in response to the pair of the second chambers 110 and 120 restraining both shoulders of the occupant, the first chamber 130 may support the headrest 30 and an upper portion of the seat 20.

The second chamber 110 on the first side may be provided with an outer panel 111. A chamber region of the second chamber 110 on the first side may be defined by the outer panel 111 and an inner panel 131.

The second chamber 120 on the second side may be provided with an outer panel 121. A chamber region of the second chamber 120 on the second side may be defined by the outer panel 121 and the inner panel 131.

The first chamber 130 may be provided with an outer panel 132. A chamber region of the first chamber 130 may be defined by the outer panel 132 and the inner panel 131.

The outer panel 111 of the second chamber 110 on the first side may define an outer region of the second chamber 110 on the first side, and the outer panel 121 of the second chamber 120 on the second side may define an outer region of the second chamber 120 on the second side. The outer panel 132 of the first chamber 130 may define an outer region of the first chamber 130.

The inner panel 131 is a portion that comes into direct contact with both sides of the occupant's head or the occupant's back of the head, and the inner panel 131 may define an internal region of each of the chambers 110, 120, and 130.

Accordingly, a lateral width of the second chamber 110 on the first side may be determined by the outer panel 111 of the second chamber 110 on the first side and the inner panel 131, and a lateral width of the second chamber 120 on the second side may be determined by the outer panel 121 of the second chamber 120 on the second side and the inner panel 131. Similarly, a front-to-rear width of the first chamber 130 may be determined by the outer panel 132 of the first chamber 130 and the inner panel 131.

The outer panel 111 of the second chamber 110 on the first side, the outer panel 121 of the second chamber 120 on the second side, the outer panel 132 of the first chamber 130, and the inner panel 131 may be directly sewn together, or may be sewn to another panel and integrally formed.

In an embodiment, each of the outer panels 111 and 121 may be sewn and coupled to a connecting panel, and the connecting panel may be sewn to the inner panel 131, such that the outer panels 111 and 121 and the inner panel 131 may be integrally formed. Reference numerals 111a and 121a denote sewing lines along which the outer panels 111 and 121 are sewn and coupled to another panel to define their respective second chamber regions.

The aligning tether 160 connects the pair of the second chambers 110 and 120. The aligning tether 160 may be provided with a cord or strap having a preset length, and accordingly, spacing between the pair of the second chambers 110 and 120 may be restricted within the preset length of the aligning tether 160. Accordingly, a degree of spreading, i.e., spacing, between the pair of the second chambers 110 and 120 may be controlled by the aligning tether 160.

The aligning tether 160 may be set such that the a portion coupled to the second chamber 110 on the first side and a portion coupled to the second chamber 120 on the second have the same height at the time of full inflation. Accordingly, the pair of the second chambers 110 and 120 may be deployed at the same height without twisting, and may be deployed accurately at a set point above the occupant's shoulders.

The aligning tether 160 may control aligning between the pair of the second chambers 110 and 120. Accordingly, since the pair of the second chambers 110 and 120 may be disposed at the same height, the occupant's shoulders may be restrained simultaneously, thereby effectively restricting the occupant's behavior after a collision.

The aligning tether 160 may serve as a reference point for folding the airbag 100. Accordingly, the second chambers 110 and 120 may be folded in alignment, thereby guiding symmetrical deployment of the second chambers 110 and 120.

The aligning tether 160 may be coupled to the front end portion of each of the pair of the second chambers 110 and 120. At the time of full inflation, the aligning tether 160 and the occupant's head positioned between the pair of the second chambers 110 and 120 are spaced from each other as far apart as possible. Accordingly, the occupant's face may not come into contact with the aligning tether 160, or even if the occupant's face comes into contact with the aligning tether 160, the occupant's face may not be injured by the aligning tether 160. The aligning tether 160 may include a soft material, such that the occupant's face is not injured even if the occupant's face comes into contact with the aligning tether 160.

The aligning tether 160 may be coupled to the front end portion of each of the outer panels 111 and 121 of the pair of the second chambers 110 and 120. Since the aligning tether 160 is coupled to the outer panels 111 and 121, rather than the inner panel 131, the spreading between the pair of the second chambers 110 and 120 may be more firmly restrained.

The aligning tether 160 may be sewn and coupled to the front end portion of each of the pair of the second chambers 110 and 120.

A first sewing portion 112 may be provided at the front end portion of the outer panel 111 of the second chamber 110 on the first side. The first sewing portion 112 is a portion that is sewn and coupled to the aligning tether 160. The first sewing portion 112 and a first side of the aligning tether 160 may be sewn and coupled to each other to form sewing lines 112a and 166a, respectively.

A second sewing portion 122 may be provided at the front end portion of the outer panel 121 of the second chamber 120 on the second side. The second sewing portion 122 is a portion that is sewn and coupled to the aligning tether 160. The second sewing portion 122 and a second side of the aligning tether 160 may be sewn and coupled to each other to form sewing lines 122a and 166a, respectively.

Referring to FIGS. 8 and 9, a vertical length of the first sewing portion 112 may be greater than or equal to half of a vertical length of the front end portion of the second chamber 110 on the first side. Similarly, a vertical length of the second sewing portion 122 may be greater than or equal to half of a vertical length of the front end portion of the second chamber 120 on the second side.

The outer panels 111 and 121 are sewn and coupled at the first and second sewing portions 112 and 122, respectively. Accordingly, portions where the first and second sewing portions 112 and 122 are sewn and coupled to the pair of outer panels 111 and 121 may be made to occupy at least half of the vertical length of the front end portions of the outer panels 111 and 121, thereby stably securing coupling strength between the first and second sewing portions 112 and 122 and the outer panels 111 and 121.

The aligning tether 160 may be provided with a plurality of openings 166 to secure an occupant's field of view. Accordingly, with the airbag 100 deployed, the occupant may quickly assess a situation ahead through the openings 166, and thus the occupant may respond safely and quickly after a collision of the vehicle body V occurs.

The plurality of openings 166 may be disposed to be spaced apart from a centerline of the aligning tether 160. Since the openings 166 are not disposed to overlap the centerline of the aligning tether 160, a frontal portion of the occupant's face, particularly the chin, may be prevented from being caught in the openings 166.

Although the present disclosure has been described with reference to the embodiments illustrated in the drawings, the embodiments are merely for illustrative purposes, and those skilled in the art will appreciate that various modifications and other equivalent embodiments are possible from the embodiments. Therefore, the true technical scope of the present disclosure should be defined by the following claims.

## Claims

1. An airbag device for a vehicle, the airbag device comprising:
a seat mounted to a vehicle body and configured to allow an occupant to sit thereon;
a headrest mounted to the seat and configured to support the occupant's head;
a housing disposed at a rear of the seat; and
an airbag mounted to the housing and configured to be deployed to protect the occupant's head or neck in the event of a collision of the vehicle body, wherein the airbag comprises:
a first chamber configured to be inflated by fluid supplied from an inflator;
a pair of second chambers configured to be in communication with the first chamber and disposed on opposing sides of occupant's head; and
an aligning tether configured to connect the pair of second chambers and to restrict spacing between the pair of second chambers.

2. The airbag device for the vehicle of claim 1, wherein the aligning tether is coupled to a front end portion of each of the pair of second chambers.

3. The airbag device for the vehicle of claim 2, wherein the aligning tether is sewn and coupled to the front end portion of each of the pair of second chambers, and a vertical length of a sewing portion is greater than or equal to half of a vertical length of the front end portion each of the second chambers.

4. The airbag device for the vehicle of claim 2 or 3, wherein the aligning tether is coupled to the front end portion of each of outer panels of the pair of second chambers.

5. The airbag device for the vehicle of any one of claims 1 to 4, wherein the aligning tether comprises a plurality of openings to secure the occupant's field of view.

6. The airbag device for the vehicle of claim 5, wherein the plurality of openings are spaced apart from a centerline of the aligning tether.

7. The airbag device for the vehicle of any one of claims 1 to 6, wherein:
the first chamber is configured to be deployed from a rear of the headrest and inflated, and
the second chambers are configured to be deployed from a front of the first chamber and inflated.

8. The airbag device for the vehicle of claim 7, wherein the first chamber is configured to come into contact with a rear surface of the headrest to support the headrest.

9. The airbag device for the vehicle of any one of claims 1 to 8, wherein the first chamber and the pair of second chambers, have an U-shape or a Korean letter ' 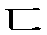 '-shape when fully inflated and viewed from above.

10. The airbag device for the vehicle of any one of claims 1 to 9, wherein lower end portions of the pair of second chambers are positioned above the occupant's shoulders, respectively.
